Europäisches Patentamt

(19) European Patent Office

Office européen des brevets

(11) Numéro de publication: **0 079 268**
**B1**

(12) **FASCICULE DE BREVET EUROPÉEN**

(45) Date de publication du fascicule du brevet:
22.07.87

(51) Int. Cl.⁴: **G 01 J 9/02,** G 01 C 19/64

(21) Numéro de dépôt: **82401987.1**

(22) Date de dépôt: **27.10.82**

(54) **Interferomètre de type Michelson à miroir photoréfractif.**

(30) Priorité: **09.11.81 FR 8120958**

(43) Date de publication de la demande:
**18.05.83 Bulletin 83/20**

(45) Mention de la délivrance du brevet:
**22.07.87 Bulletin 87/30**

(84) Etats contractants désignés:
**DE GB NL SE**

(56) Documents cité:
**EP-A-0 026 128**
**FR-A-2 385 079**
**FR-A-2 416 452**
**US-A-4 198 162**

(73) Titulaire: **THOMSON- CSF, 173, Boulevard Haussmann, F-75379 Paris Cedex 08 (FR)**

(72) Inventeur: **Papuchon, Michel, THOMSON- CSF SCPI 173, bld Haussmann, F-75379 Paris Cedex 08 (FR)**
Inventeur: **Arditty, Hervé, THOMSON- CSF SCPI 173, bld Haussmann, F-75379 Paris Cedex 08 (FR)**
Inventeur: **Graindorge, Philippe, THOMSON- CSF SCPI 173, bld Haussmann, F-75379 Paris Cedex 08 (FR)**
Inventeur: **Huignard, Jean- Pierre, THOMSON- CSF SCPI 173, bld Haussmann, F-75379 Paris Cedex 08 (FR)**

(74) Mandataire: **Wang, Pierre, THOMSON- CSF SCPI 173, Bld Haussmann, F-75379 Paris Cedex 08 (FR)**

## Description

La présente invention concerne un dispositif interférométrique comprenant un milieu photoréfractif.

L'interféromètre classique de type interféromètre de MICHELSON comportent généralement une source de rayonnement monochromatique, un moyen optique diviseur de faisceau tel qu'une lame semi-transparente qui alimente deux bras de mesure terminés par des miroirs et un détecteur de rayonnement agencé pour recueillir en superposition via le moyen optique diviseur les rayonnements ayant effectué l'aller-retour selon les deux bras de mesure. Un tel dispositif permet de mesurer un grand nombre de grandeurs physiques susceptibles d'affecter la propagation d'un rayonnement optique le long des bras de mesure. Parmi ces grandeurs physiques, certaines sont à l'origine d'effets réciproques qui produisent le même retard de transmission quel que soit le sens de propagation du rayonnement optique dans chacun des bras de mesure. D'autres grandeurs physiques sont à l'origine d'effets non réciproques qui influencent le retard de transmission de manière différente selon le sens de propagation du rayonnement optique. Les deux effets non réciproques habituellement considérés sont l'effet FARADAY et l'effet inertiel relativiste. L'effet FARADAY intervient lorsque le bras de mesure comporte un milieu matériel dans lequel un champ magnétique crée une orientation préférentielle de spin des électrons. L'utilisation de cet effet a permis d'adapter l'interféromètre à la mesure du courant électrique. Dans ce cas, les bras de mesure peuvent être bouclés en faisant circuler le rayonnement optique dans un guide d'onde tel qu'une fibre optique excitée à chaque extrémité. Ceci permet de supprimer les miroirs et l'interféromètre devient un interféromètre en anneau. L'effet inertiel relativiste mis en oeuvre dans un interféromètre en anneau se nomme effet SAGNAC et l'interféromètre prend alors le nom de gyromètre.

Les effets réciproques ne sont pas liés à la destruction de la symétrie de l'espace ou d'un milieu matériel. On les observe lorsque les bras de mesure sont le siège de contraintes mécaniques optiques ou thermiques.

Lorsqu'un interféromètre de MICHELSON est utilisé pour mesurer une certaine grandeur physique, il est en général sensible à d'autres grandeurs physiques qui peuvent fausser la mesure.

Pour un effet réciproque, les miroirs classiquement montés à l'extrémité des bras de mesure font paraître ceux-ci deux fois plus long qu'ils ne sont en réalité, ce qui constitue un inconvénient majeur si l'on s'intéresse à la mesure d'un effet non réciproque.

On connaît par ailleurs des systèmes optiques réflecteurs basés sur l'utilisation de milieux photoréfractifs qui permettent de réfléchir un front d'onde incident sous la forme d'un front d'onde conjugué.

On trouvera des exemples de tels systèmes dans la demande de brevet européen N° 80 401 283.9 publiée le 01.04.81 sous le N° EP-A-0 026 128 et dans le brevet américain N° US-A-4 198 162 déposée le 23 mai 1978. Par ailleurs, la demande de brevet français N° FR-A-2 385 079 publiée le 20 octobre 1978 et la demande de certificat d'addition N° FR-A-2 416 452 publiée le 31 août 1979 décrivent des dispositifs utilisant un milieu photoréfractif dans lequel on fait interférer des ondes lumineuses pour réaliser de l'affichage par interférométrie holographique.

Un miroir ordinaire renvoie la lumière comme si elle provenait d'un objet virtuel non confondu avec l'objet qui éclaire ce miroir. Au contraire, un milieu photoréfractif peut réfléchir un front d'onde ayant une phase conjuguée qui ramène vers l'objet un rayonnement isomorphe de celui qui en était issu. En présence d'effets réciproques, cette réflexion interactive assure l'insensibilité à de tels effets, à condition qu'ils n'aient pas varié durant l'aller-retour du rayonnement et que le milieu photoréfractif ait pu s'adapter aux variations de ces effets. Par contre, cette aptitude à l'effacement des effets réciproques ne nuit pas à la mesure interférométrique des effets non réciproques, ce qui permet de concevoir un nouveau type d'interféromètre dont l'application appartient à un domaine habituellement réservé à l'interféromètre en anneau.

L'invention a pour objet un interféromètre à milieu photoréactif, dans lequel l'interférence de deux faisceaux lumineux engendre des strates d'indices de réfraction différents, comprenant:
- une source de rayonnement monochromatique;
- un moyen optique diviseur de faisceau recevant un faisceau lumineux de la source de rayonnement et retransmettant une première portion dudit faisceau à un premier bras de mesure et une deuxième portion dudit faisceau à un deuxième bras de mesure;
- un milieu photoréactif (8) photoexcitable dans lequel des photons incidents créent des porteurs de charges qui peuvent diffuser au sein dudit milieu, ainsi qu'un miroir sphérique, qui lui est associé, ledit milieu photoréfractif étant placé sur les trajets des première et deuxième portions de faisceau;
- un moyen photodétecteur permettant de détecter la lumière retransmise par le milieu photoréfractif;
- le premier bras de mesure comportant une première fibre optique possédant une extrémité d'émission (B) émettant la première portion de faisceau vers le milieu photoréfractif, le deuxième bras de mesure comportant également une deuxième fibre optique possédant une extrémité d'émission, caractérisé en ce que;
- le miroir sphérique est agencé pour recevoir à travers le milieu photoréfractif la première portion de faisceau issue de l'extrémité d'émission (B) de la première fibre optique de telle façon que la première portion de faisceau soit réfléchie sous incidence normale et vienne se focaliser sur la même extrémité d'émission (B);

- l'extrémité d'émission (D) de la deuxième fibre optique émet la deuxième portion de faisceau vers le milieu photoréfractif en sens inverse de la première portion de faisceau émise par l'extrémité d'émission (B) de la première fibre optique;

- le moyen photoréfractif, d'une part, retransmet la première portion de faisceau au miroir sphérique, et, d'autre part, réfléchit la deuxième portion de faisceau dans le deuxième bras de mesure; et

- le moyen photodétecteur est situé sur le trajet commun de retour des deux portions de faisceaux après qu'ils aient été réfléchis par le milieu photoréfractif et le miroir sphérique et qu'ils aient été combinés par le moyen optique diverseur du faisceau.

L'invention sera mieux comprise au moyen de la description ci-après et des figures annexées parmi lesquelles:

La figure 1 représente un premier exemple de réalisation d'un interféromètre selon l'invention.

La figure 2 est une figure explicative relative au schéma de la figure 1,

La figure 3 illustre des détails de réalisation du dispositif de la figure 1.

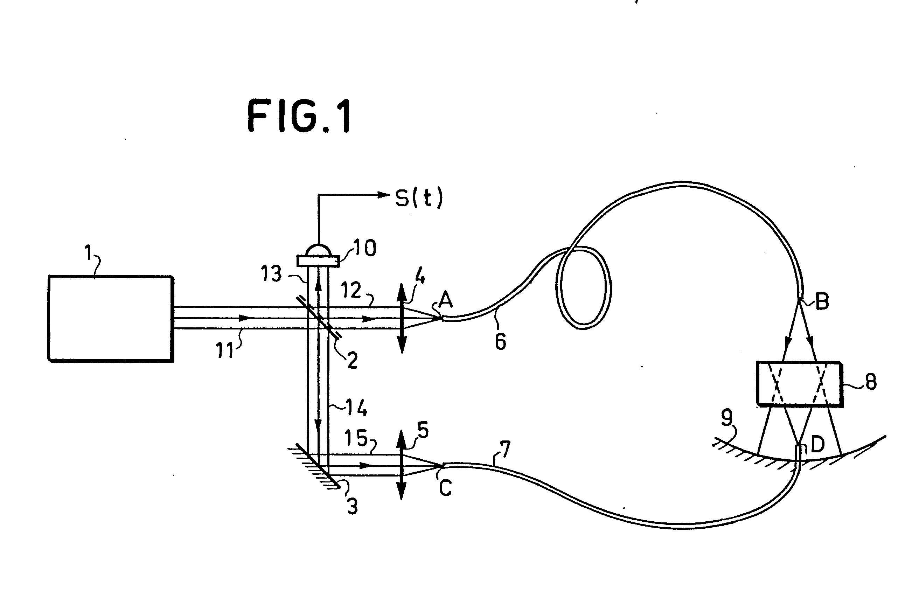

Sur la figure 1, on peut voir un interféromètre à deux bras qui se distingue d'un interféromètre de MICHELSON par l'utilisation d'un moyen réflecteur photoréfractif en lieu et place des miroirs classiques.

L'interféromètre représenté possède en commun avec l'interféromètre de MICHELSON classique une source 1 de rayonnement monochromatique qui émet un faisceau 11 en direction d'un moyen optique diviseur 2 constitué par exemple par une lame plane semi-réfléchissante. Le rayonnement 11 incident sur la lame 2 se scinde en une première portion transmise 12 et une seconde portion réfléchie 14. La portion transmise 12 est focalisée par une lentille 4 à l'entrée A d'un premier guide d'onde optique 6 qui réémet cette portion de rayonnement par sa sortie B.

La portion réfléchie 14 est renvoyée par un miroir 3 vers une lentille qui focalise le rayonnement 15 sur l'entree C d'un sécond guide d'onde optique 7. L'extrémité D du guide d'onde 7 rayonne un faisceau divergent qui va à la rencontre du faisceau divergent rayonné par l'extrémité B du guide d'onde 6. S'il s'agissait d'un interféromètre de MICHELSON classique, on pourrait par exemple métalliser les terminaisons B et D pour renvoyer les deux portions de rayonnement vers la lame 2 qui assure leur superposition dans un faisceau 13. L'interférence des deux portions de rayonnement est détectée par le photodétecteur 10 qui délivre un signal S(t) représentatif du défilement des franges d'interférence. Les deux bras de mesure de l'interféromètre sont alors composés l'un des éléments 4, 6 et l'autre des éléments 3, 5,7.

L'interféromètre de la figure 1 met en oeuvre un milieu photoréfractif 8 et un miroir sphérique concave 9 pour réfléchir de B en A et de D en C les portions de rayonnement qui ont circulé dans les deux bras de mesure. Le miroir sphérique concave 9 est agencé pour recevoir à travers le milieu 8 un front d'onde sphérique issu de l'extrémité B de telle façon que ce front d'onde soit réfléchi sous incidence normale et vienne se focaliser sur l'extrémité B. Hormis la présence du milieu 8, cette terminaison réflective du guide d'onde 6 serait classique.

En ce qui concerne la terminaison du guide d'onde 7, le milieu photoréfractif 8 coopère avec le miroir 9 et le rayonnement de pompage issu de l'extrèmité B pour renvoyer vers l'extrémité D un rayonnement qui ait la phase conjuguée du rayonnement émis par cette extrémité D et qui y converge spontanément.

Comme milieu photoréfractif, on peut utiliser les cristaux d'oxyde de bismuth-silicium (BSO), d'oxyde de bismuth-germanium (BGO), mais également le titanate de baryum $B_aT_iO_3$ et le niobate de potassium $K N_bO_3$.

Un milieu photoréfractif est un milieu photoexcitable dans lequel des photons incidents créent des porteurs de charge qui peuvent diffuser au sein du matériau lorsque l'éclairement comporte des zones sombres alternant avec des zones claires. Ce milieu est également électro-optique, ce qui permet d'observer des variations d'indice de réfraction engendrées par le champ électrique interne qui, lui-même, provient de la migration des porteurs de charge. Sur la base de ces propriétés, on peut conditionner optiquement un milieu photoréfractif en y faisant interférer un faisceau signal et un faisceau de pompage. Le réseau de franges engendre des strates d'indice de réfracton différents qui, en diffractant le faisceau de pompage, peuvent engendrer un faisceau signal conjugué. Ceci se produit en conformité avec la technique de l'interférométrie quatre ondes, lorsque le faisceau de pompage qui a traversé le milieu est renvoyé vers celui-ci par un miroir assurant le retour inverse.

En se reportant à la figure 1, on voit que le rayonnement qui émerge de l'extrémité B et qui traverse le milieu photoréfractif 8 arrive avec une incidence normale sur la surface réfléchissante du miroir 9 qui le renvoie vers l'extrémité B après retraversée du milieu 8. Ce rayonnement peut être considéré comme le faisceau de pompage du milieu photoréfractif 8.

Le rayonnement provenant de l'extrémité D du guide d'onde 7 constitue alors un faisceau signal qui interfère au sein du milieu photoréfractif 8 avec le faisceau de pompage. Cette interférence module spatialement les propriétés réfringentes du milieu photoréfractif et il s'y développe un système de strates d'indice de réfraction différents que l'on peut considérer comme un hologramme dynamique de la structure du rayonnement contenu dans le faisceau signal. En recevant le rayonnement de pompage qui traverse le milieu photoréfractif 8 après réflexion normale sur le miroir sphérique 9, l'hologramme dynamique diffracte vers l'extrémité D du guide d'onde 7 une reconstruction conjuguée du rayonnement qui émerge de cette extrémité. Si le rayonnement qui émerge de l'extrémité D en direction du milieu photoréfractif est une onde électromagnétique progressive, la reconstruction conjuguée est l'onde électromagnétique régressive associée ayant des fronts d'onde isomorphes avec changement de signe du déphasage, celui-ci étant évalué en prenant pour référence la référence de phase du faisceau de pompage.

D'après ce qui précède, on voit que le réseau de strates du milieu photoréfractif 8 se comporte comme un miroir de renvoi vis-à-vis de l'extrémité D du second bras de mesure de l'interféromètre. Cette fonction réflectrice n'impose pas de condition particulière au faisceau signal, à condition que le renvoi du rayonnement de pompage par le miroir 9 conserve la forme des fronts d'onde. On choisira donc un guide d'onde 6 de type monomode et la source de rayonnement 1 devra fournir un rayonnement de longueur de cohérence appropriée. La source 1 est par exemple un laser hélium-néon ou un laser semiconducteur monomode. On peut aussi faire appel à un filtre de mode pour éliminer des modes d'oscillation parasites et à cet effet le diviseur optique 2 peut être efficace lorsqu'il se présente sous la forme d'un circuit optique intégré à guides d'ondes monomodes.

L'utilisation comme miroir de renvoi d'un hologramme dynamique résultant de l'interaction dans le milieu photoréfractif 8 des rayonnements issus des extrémités B et D des deux bras de mesure de l'interféromètre est riche de conséquences. L'une de celles-ci est que le second bras de l'interféromètre peut, sans inconvénient, comporter une fibre optique multimode 7. Les autres conséquences seront mieux comprise en considérant les effets réciproques et non-réciproques qui se manifestent dans les bras de mesure de l'interféromètre et en tenant compte, le cas échéant, du temps d'établissement de l'hologramme dynamique.

Pour clarifier l'exposé du mode de fonctionnement, on fera d'abord l'étude de la détection par décalage de franges des effets réciproques et non-réciproques affectant exclusivement le second bras de l'interféromètre et après on verra ce qui se passe dans le cas du premier bras de mesure.

En supposant qu'un effet réciproque produise entre C et D un déphasage $\Delta\varphi$, ce déphasage $\Delta\varphi$ sera également produit entre D et C lors du retour inverse le long du second bras de mesure. Dans ce cas, l'effet réflecteur du milieu photoréfractif se traduit par l'envoi vers l'extrémité D d'un faisceau signal ayant la phase conjuguée - $\Delta\varphi$. La somme algébrique des déphasages occasionnés par un effet réciproque pour un aller-retour du rayonnement dans le second bras de l'interféromètre n'entraîne pas de décalage de franges en régime établi. L'interféromètre est insensible à l'effet réciproque, alors qu'avec un miroir classique on aurait obtenu un décalage de franges proportionnel à 2 $\Delta\varphi$. L'insensibilité à l'effet réciproque peut être imparfaite si l'effet a varié entre l'aller et le retour ce qui suppose une variation extrêmement rapide en pratique. Cependant, les facultés d'adaptation du milieu photoréfractif peuvent faire qu'une variation lente d'effet réciproque soit suivie avec agilité par l'hologramme dynamique, alors qu'une variation plus rapide introduit un traînage grâce auquel ce type de variation est perçu par un décalage de franges. En jouant sur la nature du matériau photoréfractif, sur le pas des strates, sur l'intensité d'irradiation et sur la présence d'un champ électrique externe, engrendé par des moyens de polarisation électrique, on peut définir une constante de temps qui mesure le temps d'établissement d'un hologramme dynamique. Cette donnée permet d'attribuer une caractéristique de filtre passe-haut à l'interféromètre en vue de la détection sélective d'effets réciproques.

En supposant maintenant qu'un effet non-réciproque produise entre C et D un déphasage $\Delta\varphi$, le déphasage produit entre D et C est $\Delta\varphi$. On a supposé ici que l'effet non-réciproque a la même amplitude dans les deux sens, ce qui est le plus souvent le cas en pratique. Comme le milieu photoréfractif 8 génère le déphasage conjugué - $\Delta\theta$, on voit que l'aller-retour dans le second bras de mesure a donné naissance à un déphasage - 2 $\Delta\theta$ qui produit un déplacement de franges. S'il s'était agi d'un miroir classique, l'effet non-réciproque n'aurait pas produit de déplacement de franges. L'interféromètre de la figure 1 est donc tout à fait applicable à la mesure du courant électrique via l'effet FARADAY ou à celle d'une vitesse de gyration via l'effet relativiste. Dans ce type d'application, il y a lieu d'enrouler un conducteur électrique autour de l'un au moins des guides d'ondes 6 et 7, ou d'enrouler l'un au moins de ceux-ci sur un mandrin, comme cela se pratique avec les interféromètres en anneau.

Il reste à considérer maintenant la détection interférométrique d'un effet réciproque ou non-réciproque appliqué au premier bras de mesure.

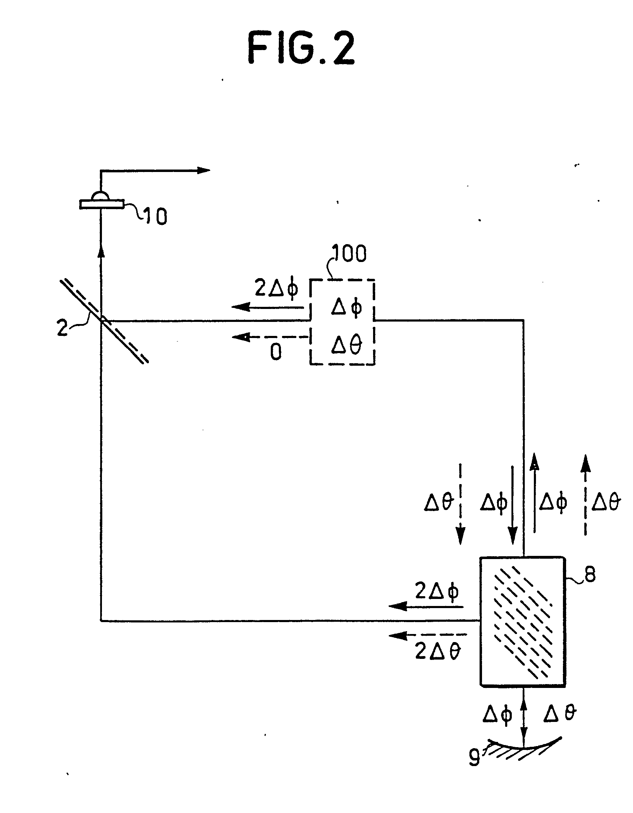

La figure 2 reprend schématiquement les éléments essentiels de la figure 1 avec, dans le premier bras de mesure, une source fictive 100 qui symbolise la manifestation d'un effet réciproque par un déphasage $\Delta\varphi$ et celle d'un effet non-réciproque par un déphasage $\Delta\theta$.

Les flèches en trait plein représentent la circulation des rayonnements avec les déphasages acquis du fait d'un effet réciproque. Les flèches en pointillé donnent le même genre d'information pour un effet non-réciproque.

En ce qui concerne l'effet réciproque et en partant de la lame 2, on voit que l'onde de pompage atteint le milieu 8 avec un déphasage $\Delta\varphi$ qui se conserve jusqu'à ce que l'effet réciproque l'ait doublé lors du retour inverse. L'interaction au sein du milieu photoréfractif intègre un déphasage $\Delta\varphi$, mais lors de la génération du rayonnement signal conjugué, le déphasage $\Delta\varphi$ de l'onde de pompage s'ajoute au déphasage $\Delta\varphi$ du réseau d'indice représenté sur la figure 2 par des strates en pointillé. Il en résulte que l'énergie rayonnée renvoyée à la lame 2 par les deux bras de mesure a subi les mêmes déphasages $2\Delta\varphi$, de sorte qu'aucun décalage de frange n'est détecté par le détecteur 10.

Dans le cas d'un effet non-réciproque, les déphasages $\Delta\theta$ et $2\Delta\theta$ obéissent aux mêmes relations à l'endroit du milieu photoréfractif 8 mais, le rayonnement recueilli en retour par la lame 2 en provenance du premier bras de mesure n'accuse plus aucun déphasage. Le détecteur 10 détecte donc un décalage de franges proportionnel à $2\Delta\theta$. En vertu du principe de superposition des effets, le cas général se ramène à la description qui précède.

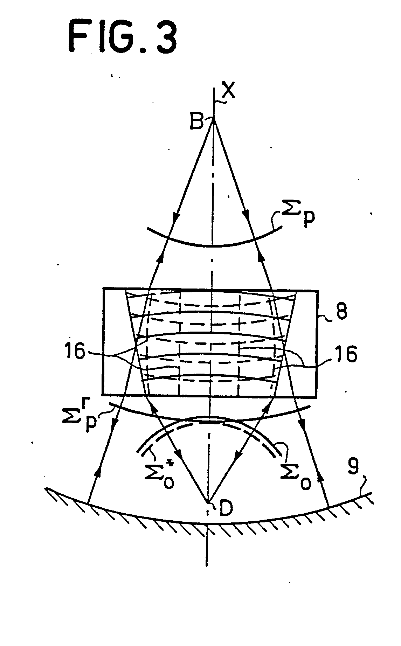

Sur la figure 3, on a détaillé le comportement du milieu photoréfractif avec la configuration adoptée sur la figure 1. L'onde de pompage de front d'onde $\Sigma_p$ centré sur l'extrémité B du premier bras de mesure, interfère avec l'onde signal de front d'onde $\Sigma_o$ issue de l'extrémité D du second bras de mesure. Des strates d'indice 16 sont ainsi créées dans le milieu 8. L'onde de pompage refléchie par le miroir 9 de centre B présente un front d'onde $\Sigma_p^r$ qui remonte le long de l'axe X vers l'extrémité B; cette onde est diffractée par les strates 16 en donnant naissance à une reconstruction conjuguée de l'onde signal. Cette reconstruction est caractérisée par le front d'onde conjugué $\Sigma_o^*$ qui converge vers l'extrémité D du second bras de mesure.

Afin d'améliorer le contraste des franges au niveau du photodétecteur, des moyens de polarisation peuvent être intercalés dans l'un des bras de mesure, une lame quart d'onde étant intercalée entre le milieu photoréfractif et le miroir sphérique.

**Revendications**

1. Interféromètre à milieu photoréactif, dans lequel l'interférence de deux faisceaux lumineux engendre des strates d'indices de réfraction différents, comprenant:
   - une source de rayonnement monochromatique (1);
   - un moyen optique diviseur de faisceau (2) recevant un faisceau lumineux de la source de rayonnement et retransmettant une première portion dudit faisceau à un premier bras de mesure (6) et une deuxième portion dudit faisceau à un deuxième bras de mesure (7);
   - un milieu photoréactif (8) photoexcitable dans lequel des photons incidents créent des porteurs de charges qui peuvent diffuser au sein dudit milieu, ainsi qu'un miroir sphérique (9), qui lui est associé, ledit milieu photoréfractif étant placé sur les trajets des première et deuxième portions de faisceau;
   - un moyen photodétecteur (10) permettant de détecter la lumière retransmise par le milieu photoréfractif;
   - le premier bras de mesure (6) comportant une première fibre optique possédant une extrémité d'émission (B) émettant la première portion de faisceau vers le milieu photoréfractif (8), le deuxième bras de mesure comportant également une deuxième fibre optique possédant une extrémité d'émission (D), caractérisé en ce que;
   - le miroir sphérique (9) est agencé pour recevoir à travers le milieu photoréfractif (8) la première portion de faisceau issue de l'extrémité d'émission (B) de la première fibre optique de telle façon que la première portion de faisceau soit réfléchie sous incidence normale et vienne se focaliser sur la même extrémité d'émission (B);
   - l'extrémité d'émission (D) de la deuxième fibre optique émet la deuxième portion de faisceau vers le milieu photoréfractif (8) en sens inverse de la première portion de faisceau émise par l'extrémité d'émission (B) de la première fibre optique;
   - le moyen photoréfractif (8), d'une part, retransmet la première portion de faisceau au miroir sphérique (9), et, d'autre part, réfléchit la deuxième portion de faisceau dans le deuxième bras de mesure; et
   - le moyen photodétecteur (10) est situé sur le trajet commun de retour des deux portions de faisceaux après qu'ils aient été réfléchis par le milieu photoréfractif (8) et le miroir sphérique (9) et qu'ils aient été combinés par le moyen optique diviseur du faisceau (2).

2. Interféromètre selon la revendication 1, caractérisé en ce que les première et deuxième portions de faisceaux émises par les extrémités d'émission (B, D) des première et deuxième fibres optiques, respectivement, sont des ondes sphériques.

3. Interféromètre selon la revendication 1, caractérisé en ce que le miroir sphérique (9) a son centre situé à l'extrémité d'émission (D) de la deuxième fibre optique.

4. Interféromètre selon la revendication 1, caractérisé en ce que le premier au moins desdits bras comporte une fibre optique monomode (6).

5. Interféromètre selon la revendication 1, caractérisé en ce que des moyens de polarisation électrique sont associés au milieu photoréfractif (8).

6. Interféromètre selon la revendication 1, caractérisé en ce l'un au plus des bras de mesure comporte une fibre optique multimode (7).

7. Interféromètre selon la revendication 1, caractérisé en ce que des moyens de polarisation sont intercalés dans l'un desdits bras de mesure; une lame quart d'onde étant intercalée entre ledit milieu photorefractif (8) et ledit miroir sphérique (9).

8. Interféromètre selon l'une quelconque des revendications précédentes, caractérisé en ce que le matériau utilisé comme milieu photoréfractif est choisi dans le groupe comprenant: l'oxyde de bismuth-silicium, l'oxyde de bismuth-germanium, le titanate de baryum et le niobate de potassium.

**Patentansprüche**

1. Interferometer mit lichtbrechendem Medium, in dem die Interferenz von zwei Strahlenbündeln Überlagerungen mit unterschiedlichen Brechungskoeffizienten erzeugt, bestehend aus
   - einer homogenen Strahlungsquelle (1),
   - einem optischen Strahlenbündelteilungsmittel (2), welches von der Strahlungsquelle ein Strahlenbündel empfängt und einen ersten Teil des genannten Strahlenbündels an einen ersten Messarm (6) sowie einen zweiten Teil des genannten Strahlenbündels an einen zweiten Messarm (7) sendet,
   - einem lichtbrechenden, photoanregbaren Medium (8), in welchem einfallende Photonen Ladungsträger erzeugen, die in dem genannten Medium diffundieren können, sowie aus einem an das lichtbrechende Medium angeschlossenen Kugelspiegel (9), wobei das genannte lichtbrechende Medium auf den Wegen der ersten und zweiten Strahlenbündelteilen liegt,
   - einem Photoempfängermittel (10), mit dessen Hilfe das von dem lichtbrechenden Medium übertragene Licht erfasst werden kann,
   - dem ersten Messarm (6) mit einer ersten Lichtleitfaser, die ein Emissionsende (B) zur Sendung des ersten Strahlenbündelteils nach dem lichtbrechenden Medium (8) besitzt, wobei auch der zweite Messarm eine zweite Lichtleitfaser mit einem Emissionsende (D) besitzt, dadurch gekennzeichnet, dass
   - der Kugelspiegel (9) so angeordnet ist, dass er über das lichtbrechende Medium (8) den von dem Emissionsende (B) der ersten Lichtleitfaser gesendeten ersten Strahlenbündelteil empfängt und zwar so, dass der erste Strahlenbündelteil unter normalem Eintrittswinkel reflektiert und an demselben Emissionsende (B) gebündelt wird,
   - das Emissionsende (D) der zweiten Lichtleitfaser den zweiten Strahlenbündelteil nach dem lichtbrechenden Medium reflektiert und zwar in entgegengesetzter Richtung zu dem von dem Emissionsende (B) der ersten Lichtleitfaser gesendeten ersten Strahlenbündelteil,
   - das lichtbrechende Medium (8) einerseits den ersten Strahlenbündelteil an den Kugelspiegel (9) überträgt und andererseits den zweiten Strahlenbündelteil in dem zweiten Messarm reflektiert und dass
   - das Photoempfängermittel (10) auf dem gemeinsamen Rückweg der beiden Strahlenbündelteilen liegt, nachdem die Strahlenbündel von dem lichtbrechenden Medium (8) und dem Kugelspiegel (9) reflektiert und von dem optischen Strahlenbündelteilungsmittel (2) kombiniert worden sind.

2. Interferometer nach Anspruch 1, dadurch gekennzeichnet, dass die von den Emissionsenden (B, D) der ersten und zweiten Lichtleitfasern gesendeten ersten und zweiten Strahlenbündelteile jeweils Kugelwellen sind.

3. Interferometer nach Anspruch 1, dadurch gekennzeichnet, dass sich der Mittelpunkt des Kugelspiegels (9) am Emissionsende (D) der zweiten Lichtleitfaser befindet.

4. Interferometer nach Anspruch 1, dadurch gekennzeichnet, dass zumindest der erste der genannten Messarme eine Monomode-Lichtleitfaser (6) besitzt.

5. Interferometer laut Anspruch 1, dadurch gekennzeichnet, dass die elektrischen Polarisationsmittel an das lichtbrechende Medium (8) angeschlossen sind.

6. Interferometer laut Anspruch 1, dadurch gekennzeichnet, dass höchstens einer der Messarme eine Mehrmoden-Lichtleitfaser (7) besitzt.

7. Interferometer laut Anspruch 1, dadurch gekennzeichnet, dass die Polarisationsmittel in einen der genannten Messarme geschaltet sind, wobei ein Viertelwellenlängenplättchen zwischen das genannte lichtbrechende Medium (8) und den genannten Kugelspiegel (9) geschaltet ist.

8. Interferometer laut einem der vorangegangenen Ansprüche, dadurch gekennzeichnet, dass der als lichtbrechendes Medium benutzte Stoff in der Gruppe ausgewählt wird, die aus Wismut-Siliziumoxyd, Wismut-Germaniumoxyd, Bariumtitanat und Kaliumniobat besteht.

**Claims**

1. Interferometer in photoreactive medium, in which the interference of two light beams creates strata having different indices of refraction, including:
   - one monochromatic source of radiation (1);
   - one optical beam divider (2) receiving a light beam from the source of radiation and retransmitting a first portion of this beam to one measurement arm (6) and a second portion of the same beam to a second measurement arm (7):
   - one photoreactive medium (8) that can be excited by light, in which incoming photons create charge carriers which can diffuse within the medium, and a spherical mirror (9) associated with it, the said photoreactive medium being placed in the paths of the first and second portions of the beam;
   - one photodetector (10) to detect the light retransmitted by the photorefractive medium;
   - the first measurement arm (6) including one optical fiber having one emitting end (B) emitting the first portion of the beam to the photoreactive medium (8), the second measurement arm also including a second optical fiber having one emitting end (D), wherein:

. the spherical mirror (9) is designed to receive through tho photoreactive medium (8) the first portion of the beam from the emitting end (B) of the first optical fiber in such a way that the first portion of the beam is reflected at normal angle of incidence and focusses on the emitting end (B);

. the emitting end (D) of the second optical fiber emits the second portion of the beam to the photoreactive medium (8) in the direction opposite the first portion of the beam emitted by emitting end (B) of the first optical fiber;

. photorefractive means (8) retransmits the first portion of the beam to spherical mirror (9) and also reflects the second portion of the beam in the second measurement arm; and

. photodetector (10) is locatod on the common return path of the two portions of beam after they have been reflected by the photoreflective medium (8) and spherical mirror (9) and are combined by the beam divider optical means (2).

2. Interferometer according to claim 1, wherein the first and second portions of the beams emitted by emitting ends (B, D) of the first and second optical fibers, respectively, are spherical waves.

3. Interferometer according to claim 1, wherein the spherical mirror (9) has its center located at the emitting end (D) of the second optical fiber.

4. Interferometer according to claim 1, wherein at least the first of the said arms includes a monomode optical fiber (6).

5. Interferometer according to claim 1, wherein electrical biasing means are associated with the photorefractive medium (8).

6. Interferometer according to claim 1, wherein at most one of the measurement arms includes one multimode optical fiber (7).

7. Interferometer according to claim 1, wherein biasing means are inserted in one of the said measurements arms, with a quarter-wave blade being inserted in the said photorefractive medium (8) and the said spherical mirror (9).

8. Interferometer according to any of the previous claims, wherein the material used as a photorefractive medium is chosen from the group including bismuth-silicon oxide, bismuth-germanium axide, barium titanate and potassium niobate.

# FIG.1

# FIG.2

# FIG.3